# EUROPEAN PATENT SPECIFICATION

(11) **EP 1 836 738 B1**
(45) Date of publication and mention of the grant of the patent: **05.10.2011**
(21) Application number: 04815992.5
(22) Date of filing: 29.12.2004
(51) Int. Cl.: H01M 8/02

(54) **FUEL CELL SEPARATOR PLATE ASSEMBLY**
BRENNSTOFFZELLENANORDNUNG MIT SEPARATORPLATTE
ENSEMBLE PLAQUE SEPARATEUR DE PILE A COMBUSTIBLE

(43) Date of publication of application: 26.09.2007
(73) Proprietor: UTC Power Corporation, South Windsor, CT 06074 (US)
(72) Inventor: BREAULT, Richard, D., North Kingstown, RI 02852 (US); LUOMA, Warren, L., Manchester, CT 06040 (US); ROCHE, Robert, P., Cheshire, CT 06410 (US)
(74) Representative: Leckey, David Herbert
(86) International application number: PCT/US2004/044007
(87) International publication number: WO 2006/071232

(56) References cited:
- EP-A- 0 683 536
- WO-A-02/43173
- US-A- 4 988 583
- US-A- 5 300 370
- US-A- 5 558 955
- US-B1- 6 296 964
- US-B2- 6 613 252

## Description

### 1. Field of the Invention

This invention generally relates to fuel cells. More particularly, this invention relates to separator assemblies for fuel cells.

### 2. Description of the Related Art

Fuel cells are well known. An anode and a cathode operate in a known manner to produce electrical energy under appropriate operating conditions. The cathode and anode are typically separated by a separator plate that is electrically conductive to conduct electrons but isolate the electrolyte and reactants of adjacent cathodes and anodes.

Traditionally, separator plates have been bonded to a cathode flow field plate of one cell and the anode flow field plate of an adjacent cell. Typical bonding methods included fluorocarbon films because typical separator plates were made of carbon. Typical flow field plates were made of carbon-carbon composites. In most arrangements, the flow field plates are porous and hydrophilic so that they serve as an electrolyte reservoir plate in which excess electrolyte can be stored in a known manner.

There are recognized drawbacks associated with such arrangements. One improvement is shown in U.S. Patent No. 5,558,955, which introduces a cathode flow field plate that is essentially non-porous and hydrophobic. The arrangement disclosed in that document represents an improvement over the traditional carbon-carbon flow field plates on both sides of the carbon separator plate.

Those skilled in the art are always striving to make improvements. For example, it would be advantageous to provide a more cost-effective separator plate assembly.

This invention provides an improved separator plate assembly that avoids the shortcomings and drawbacks of traditional arrangements and enhances the economies associated with such assemblies.

Examples of fuel cells using graphite in separator plates or flow field plates are disclosed in WO-A-02/43173, US-A-5,300,370, EP-A- 0683536 and US-A- 5,558,955.

### SUMMARY OF THE INVENTION

From a first aspect, the present invention provides a separator plate assembly as claimed in claim 1. Also provided is a method of making a separator plate assembly as claimed in claim 11. An example separator plate assembly for use in a fuel cell includes a separator plate layer. A first non-porous, hydrophobic flow field layer includes a hydrophobic resin that secures the first flow field layer to a first side of the separator plate layer. A second non-porous, hydrophobic flow field layer includes a hydrophobic resin that secures the second flow field layer to a second side of the separator plate layer.

In one example, the first and second flow field layers comprise natural graphite flakes and the hydrophobic resin.

In one example, the separator plate layer comprises graphite and a hydrophobic resin. In this example, the hydrophobic resin of the separator plate layer also serves to secure the flow field layers to the opposite sides of the separator plate layer.

In another example, the separator plate is a carbon separator plate.

Another example separator plate assembly for use in a fuel cell includes a separator plate layer comprising graphite and hydrophobic resin. First and second flow field layers are respectively secured to opposite sides of the separator plate layer by at least the hydrophobic resin of the separator plate layer. In one example, at least one of the flow field layers comprises graphite and a hydrophobic resin. In another example, at least one of the flow fields is a porous graphite. In another example, both flow field layers comprise graphite and a hydrophobic resin.

In another example, the separator plate assembly is a monolithic structure having a consistent material composition throughout the entire assembly. In such an example, there is no material demarcation between the separator plate layer and the flow field layers.

An example method of making a separator plate assembly for use in a fuel cell includes forming a separator plate layer. At least one non-porous, hydrophobic flow field layer is formed using graphite and a hydrophobic resin. The example method includes securing the flow field layer to the separator plate layer using at least the hydrophobic resin of the flow field layer.

In one example, forming the separator plate layer includes using graphite and a hydrophobic resin. In such examples, the hydrophobic resin of the separator plate layer and the hydrophobic resin of the flow field layer secure the two layers together.

The various features and advantages of this invention will become apparent to those skilled in the art from the following detailed description of currently preferred embodiments. The drawings that accompany the detailed description can be briefly described as follows.

### BRIEF DESCRIPTION OF THE DRAWINGS

Figure 1 is a diagrammatic, perspective illustration of an example separator plate assembly designed according to an embodiment of this invention.
Figures 2A-2C schematically illustrate an example method of making a separator plate assembly designed according to an embodiment of this invention.

### DETAILED DESCRIPTION OF THE PREFERRED EMBODIMENTS

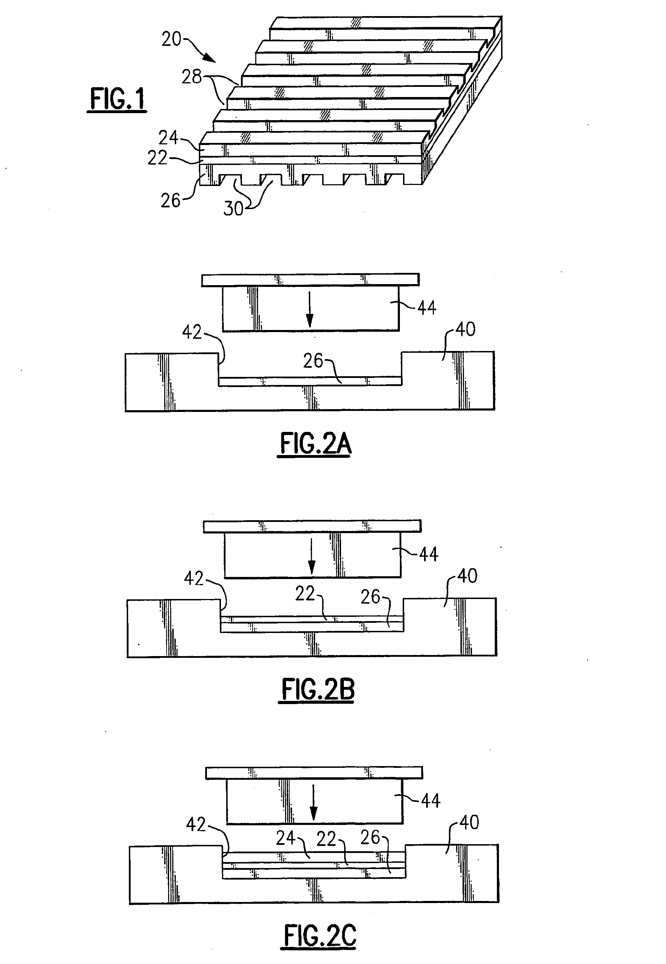

Figure 1 shows a separator plate assembly 20 that is useful in fuel cells. The example separator plate assembly 20 includes a separator plate layer 22. A first flow field layer 24 is secured to one side of the separator plate layer 22. A second flow field layer 26 is secured to a second, oppositely facing side of the separator plate layer 22.

The flow field layers 24 and 26 each include flow channels that are machined or formed into the flow field layers in a known manner. The first flow field layer 24 includes a plurality of flow channels 28 while the second flow field layer 26 includes a plurality of channels 30. The channels are preferably arranged in a perpendicular orientation relative to each other as can be appreciated from Figure 1.

The materials selected for forming the different layers of the separator plate assembly 20 may vary to meet the needs of a particular situation. Several unique combinations are disclosed as example embodiments of this invention.

In one example, the separator plate layer 22 comprises graphite and a hydrophobic resin. In one example, the graphite comprises natural graphite flakes and the hydrophobic resin comprises a fluorocarbon resin. The natural graphite flakes in one example are thermally purified such as grade SGC 2900 obtained from Superior Graphite Company of Chicago, Illinois to minimize corrosion of the graphite. One example fluorocarbon resin is commercially available from the DuPont Company and is sold under the trade name FEP TEFLON. PFA TEFLONS are also suitable.

One example separator plate layer 22 comprises between 70% and 80% graphite flakes and a corresponding, remaining percentage of the hydrophobic resin. One preferred example includes 25% hydrophobic resin and 75% graphite flakes.

One advantage to using graphite and a hydrophobic resin for forming a separator plate layer 22 is that the hydrophobic resin within the separator plate layer 22 can be used for securing one or more of the flow field layers 24, 26 to the separator plate layer 22. Such an arrangement eliminates intermediate films between the layers during a manufacturing process, which provides cost savings from a material and labor standpoint.

Another example separator plate assembly includes the separator plate layer 22 formed of graphite and a hydrophobic resin. At least one of the flow field layers 24, 26 comprises graphite and a hydrophobic resin. A different mixing ratio of graphite and hydrophobic resin is used for the flow field layer compared to the separator plate layer. In one example, the flow field layer 24 comprises approximately 11 % FEP TEFLON hydrophobic resin and approximately 89% flake graphite. The separator plate layer 22 in that example comprises 75% graphite and 25% FEP TEFLON.

In another example, one of the flow fields comprises porous graphite. In one example, the separator plate layer 22 comprises 75% graphite and 25% resin, the flow field layer 26 comprises 89% graphite and the flow field layer 24 comprises porous graphite.

It is desirable to use a higher concentration of hydrophobic resin in the separator plate layer 22 to achieve a sufficiently low rate of hydrogen diffusion across the separator plate layer. Further, a sufficiently high hydrophobic resin content in the separator plate layer 22 provides a sufficiently low rate of acid transfer through the separator plate. A separator plate layer designed according to an embodiment of this invention provides uniquely low acid transfer rates compared to previous arrangements.

In one example, both of the flow field layers 24 and 26 are formed using graphite and a hydrophobic resin. With such an arrangement, the hydrophobic resin of each layer is used to bond that layer to the corresponding adjacent layer. Again, using the hydrophobic resin of at least one of the layers to secure that layer to the next layer eliminates the requirement of using separate films, resins or adhesives for securing the various layers together.

In one example, the separator plate layer 22 also comprises graphite and a hydrophobic resin. The hydrophobic resin may be any thermoplastic resin which is chemically and physically compatible with the operating environment of the fuel cell and has a surface energy of less than 25 DYNE/cm (0.025 N/m).

One example assembly includes a separator plate layer 22 comprising between about 15% and about 30% TEFLON FEPTE9050 available from the DuPont Company. A remaining, corresponding percentage of thermally purified flake graphite grade #2901C from the Superior Graphite Company completes the formulation of the separator plate layer 22. In one preferred example, approximately 25% of the TEFLON FEP hydrophobic resin is used with approximately 75% flake graphite. This preferred formulation provides a thermal conductivity of 4.2 BTU/hr/ft/F (7.3 W/m/K), an electrical resistance that results in a voltage drop of 0.055 mV per mil (2.16 mV per mm) of thickness at a current of 100 AMPS per square foot (ASF) (1076 Amps/m²), a porosity of approximately 2-3%, a median pore size of 0.005 microns, a surface energy of approximately 35 Dynes/cm (0.035 N/m), a coefficient of thermal expansion of approximately 5-10 ppm/F (9-18 ppm 1°C) and a corrosion current at 1150 mV for 100 minutes of approximately 0.5 uA/mg in 100% H3PO4 at 400°F (204°C).

In another example, the two flow field layers 24 and 26 each comprise graphite and hydrophobic resin. The separator plate layer 22 comprises carbon and is formed as a traditional separator plate layer.

Another example separator plate assembly 20 includes a monolithic structure where the flow fields 24, 26 and the separator plate layer 22 have a uniform composition and there are no discrete zones in the separator plate assembly. In other words, the separator plate assembly 20 in this example has a consistent material composition throughout the assembly and there is no material or physical demarcation between the layers 22, 24 and 26.

The example separator plate 20 comprises flake graphite and a hydrophobic resin. In one example, the monolithic separator plate assembly 20 comprises approximately 15-25% hydrophobic resin and the balance flake graphite. One preferred composition is 20% hydrophobic resin and the balance thermally purified flake graphite.

Referring to Figures 2A-2C, example methods of making such separator plate assemblies include using a mold 40 having a mold cavity 42 and a cooperating plunger 44 to form the various layers of the assembly. As schematically shown in Figure 2A, the flow field layer 26 can be preformed in the mold 40 by depositing an appropriate amount of the selected material mixture to form the flow field layer 26. For purposes of discussion, the example method to be described includes using graphite and a hydrophobic resin for all three layers of the separator plate assembly. In this example, an appropriate mixture of graphite and hydrophobic resin is inserted into the mold cavity 42. The mold plunger 44 compresses the mixture at a suitable pressure, such as 2,000 psi (13.8 MPa).

As schematically shown in Figure 2B, a graphite and hydrophobic resin mixture is then deposited on top of the compacted material of the flow field layer 26 to establish a layer of material to form the separator plate layer 22. As mentioned above, the graphite-to-resin mixture ratio for the separator plate layer 22 preferably includes a higher amount of the hydrophobic resin to achieve the gas diffusion and acid transfer rates that are advantageous as mentioned above. Once the material for the separator plate layer 22 is dispensed into the mold cavity 42, the plunger 44 compresses that layer and the flow field layer 26 at a suitable pressure such as 2,000 psi to compact both layers.

As schematically shown in Figure 2C, a layer of graphite and hydrophobic resin mixture is deposited into the mold cavity 42 adjacent the compacted layer of material for establishing the separator plate layer 22. The flow field layer 24 in the illustrated example is deposited on top of the compacted material for the separator plate layer 22. The plunger 44 then compacts all three layers using a suitable pressure such as 2,000 psi (13.8 MPa).

Once all layers are compacted and adjacent each other in the desired arrangement, the entire assembly is heated in one example to a temperature of approximately 650°F (343°C) at a pressure of 750 psi (5.2 MPa) for approximately twenty minutes. The entire assembly is then subsequently cooled at the same pressure to less than 400°F (204°C). Additional cool down to an ambient temperature can be performed at a lower pressure (i.e., less than 750 psi) (5.2 MPa). Heating the assembly to 650°F (343°C) melts the hydrophobic resin and permits it to flow into the voids between the graphite particles. This minimizes the porosity of the layer. Cooling the layer to 4Q0°F (204°C) solidifies the molten resin and causes the graphite particles and layers to bond.

The entire assembly can then be removed from the mold cavity 42 and any release films used on the outward most surfaces of the assembly can then be removed. Flow field channels can then be machined or formed into the flow field layers in a known manner.

In an example where only the separator plate layer 22 comprises graphite and a hydrophobic resin, the flow field layers may be preformed and the compaction described above may only be needed after depositing the material for the separator plate layer 22 into the mold cavity.

In another example, the powders for layers 26, 22, 24 are sequentially loaded into the mold without using any compaction at room temperature.

In an example where only one of the flow field layers comprises graphite and a hydrophobic resin, the heating sequence described above may be used after completing the steps schematically shown in Figure 2B, for example, to provide a subassembly that can then be secured to another flow field layer using known techniques.

In another example, the separator plate assembly 20 is compressed using a double belt press that operates in a known manner.

Providing non-porous, hydrophobic flow field layers on opposite sites of a separator plate layer and using a hydrophobic resin of the flow field layers for securing them to the separator plate layer provides an improved arrangement as described above. Improved performance and cost savings are possible with such an arrangement. Additionally, utilizing a separator plate layer comprising graphite and a hydrophobic resin provides improved performance and cost-savings. A combination of one or more such layers can be used to meet the needs of a particular situation. Those skilled in the art who have the benefit of this description will be able to decide what combination will best work for their situation.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A separator plate assembly (20) for use in a fuel cell, comprising:
a separator plate layer (22);
a first nonporous, hydrophobic flow field layer (24) adjacent a first side of the separator plate layer (22); and
a second nonporous, hydrophobic flow field layer (26) adjacent a second side of the separator plate layer (22); **characterised in that**:
the first and second flow field layers (24,26) and/or the separator plate layer comprise graphite and a hydrophobic resin; and
the hydrophobic resin contained in the respective layer or layers secures the flow field layers (24,26) to the separator plate layer (22).

2. The assembly of claim 1, wherein said graphite is flake graphite.

3. The assembly of claim 2, wherein the graphite comprises natural graphite flakes.

4. The assembly of claim 3, wherein the graphite comprises thermally purified natural graphite flakes.

5. The assembly of claim 4, wherein the separator plate layer (22) comprises a carbon separator plate.

6. The assembly of any preceding claim, wherein the hydrophobic resin has a surface energy less than 25 DYNE/cm (0.025 N/m).

7. The assembly of any preceding claim, wherein the first and second flow field layers (24,26) comprise a first mixing ratio of flake graphite to hydrophobic resin and the separator plate layer (22) comprises a second, different mixing ratio of flake graphite to hydrophobic resin.

8. The assembly of claim 7, wherein the separator plate layer (22) comprises between approximately 70% and approximately 80% flake graphite and a corresponding remaining percentage of hydrophobic resin.

9. The assembly of any of claims 1 to 6, wherein the assembly has a consistent material composition comprising flake graphite and the hydrophobic resin throughout the assembly.

10. The assembly of claim 9, wherein each of the layers comprises approximately 80% flake graphite and approximately 20% hydrophobic resin.

11. A method of making a separator plate assembly (20) for use in a fuel cell, comprising:
forming a separator plate layer (22);
forming at least one flow field layer (24,26);
using flake graphite and a hydrophobic resin for forming at least one of the separator plate layer (22) or the flow field layer (24,26) such that the at least one layer is nonporous and hydrophobic; and
securing the flow field layer (24,26) to the separator plate layer (22) using the hydrophobic resin contained in the respective layer or layers.

12. The method of claim 11, including using flake graphite and hydrophobic resin for forming the flow field layer (24,26) and the separator plate layer (22) and securing the flow field layer (24,26) to the separator plate layer (22) using the hydrophobic resins of the separator plate layer and the flow field layer (24,26).

13. The method of claim 11, including forming two nonporous, hydrophobic flow field layers (24,26) using flake graphite and hydrophobic resin and securing the flow field layers (24,26) to opposite sides of the separator plate layer (22), respectively, using the hydrophobic resin of the respective flow field layers (24,26).

14. The method of claim 11, 12 or 13, including
compacting the flake graphite and hydrophobic resin for forming the flow field layer (24,26);
compacting additional flake graphite and hydrophobic resin for forming the separator plate layer (22) adjacent the compacted material of the flow field layer (24,26); and
heating the compacted materials to secure the separator plate layer (22) to the flow field layer (24,26).

15. The method of claim 14, including
compacting additional flake graphite and hydrophobic resin for forming a second nonporous, hydrophobic flow field layer (24,26) on an opposite side of the compacted separator plate layer (22) prior to the heating; and
securing the two flow field layers (24,26) to the separator plate layer (22) using the hydrophobic resins of the separator plate layer and the flow field layers (24,26), respectively.

## Patentansprüche

1. Separatorplatten-Anordnung (20) zur Verwendung in einer Brennstoffzelle, aufweisend:
eine Separatorplattenschicht (22);
eine einer ersten Seite der Separatorplattenschicht (22) benachbarte, erste nicht-poröse hydrophobe Strömungsfeldschicht (24); und
eine einer zweiten Seite der Separatorplattenschicht (22) benachbarte, zweite nicht-poröse hydrophobe Strömungsfeldschicht (26); **dadurch gekennzeichnet, dass**
die erste und die zweite Strömungsfeldschicht (24, 26) und/oder die Separatorplattenschicht Graphit und ein hydrophobes Harz aufweisen; und
das in der jeweiligen Schicht oder den jeweiligen Schichten enthaltene hydrophobe Harz die Strömungsfeldschichten (24, 26) an der Separatorplattenschicht (22) befestigt.

2. Anordnung nach Anspruch 1, wobei der Graphit Lamellengraphit ist.

3. Anordnung nach Anspruch 2, wobei der Graphit natürliche Graphitblättchen aufweist.

4. Anordnung nach Anspruch 3, wobei der Graphit thermisch gereinigte natürliche Graphitblättchen aufweist.

5. Anordnung nach Anspruch 4, wobei die Separatorplattenschicht (22) eine Kohlenstoff-Separatorplatte aufweist.

6. Anordnung nach einem vorangehenden Anspruch, wobei das hydrophobe Harz eine Oberflächenenergie von weniger als 25 DYNE/cm (0,025 N/m) hat.

7. Anordnung nach einem vorangehenden Anspruch, wobei die erste und die zweite Strömungsfeldschicht (24, 26) ein erstes Mischungsverhältnis von Lamellengraphit zu hydrophobem Harz aufweisen und die Separatorplattenschicht (22) ein zweites, unterschiedliches Mischungsverhältnis von Lamellengraphit zu hydrophobem Harz aufweist.

8. Anordnung nach Anspruch 7, wobei die Separatorplattenschicht (22) zwischen näherungsweise 70 Prozent und näherungsweise 80 Prozent Lamellengraphit und einen entsprechenden verbleibenden Prozentsatz an hydrophobem Harz aufweist.

9. Anordnung nach einem der Ansprüche 1 bis 6, wobei die Anordnung eine einheitliche Materialzusammensetzung hat, die überall in der Anordnung Lamellengraphit und das hydrophobe Harz aufweist.

10. Anordnung nach Anspruch 9, wobei jede der Schichten näherungsweise 80 Prozent Lamellengraphit und näherungsweise 20 Prozent hydrophobes Harz aufweist.

11. Verfahren zur Herstellung einer Separatorplatten-Anordnung (20) zur Verwendung in einer Brennstoffzelle, aufweisend:
Herstellen einer Separatorplattenschicht (22);
Herstellen mindestens einer Strömungsfeldschicht (24, 26);
Verwenden von Lamellengraphit und einem hydrophoben Harz zur Herstellung mindestens einer der Schichten Separatorplattenschicht (22) oder Strömungsfeldschicht (24, 26) dergestalt, dass die mindestens eine Schicht nicht-porös und hydrophob ist; und
Befestigen der Strömungsfeldschicht (24, 26) an der Separatorplattenschicht (22) unter Verwendung des in der jeweiligen Schicht oder den jeweiligen Schichten enthaltenen hydrophoben Harzes.

12. Verfahren nach Anspruch 11, umfassend die Verwendung von Lamellengraphit und hydrophobem Harz zur Herstellung der Strömungsfeldschicht (24, 26) und der Separatorplattenschicht (22), und das Befestigen der Strömungsfeldschicht (24, 26) an der Separatorplattenschicht (22) unter Verwendung des hydrophoben Harzes der Separatorplattenschicht und der Strömungsfeldschicht (24, 26).

13. Verfahren nach Anspruch 11, umfassend die Herstellung von zwei nicht-porösen, hydrophoben Strömungsfeldschichten (24, 26) unter Verwendung von Lamellengraphit und hydrophobem Harz, und das Befestigen der Strömungsfeldschichten (24, 26) jeweils an entgegengesetzten Seiten der Separatorplattenschicht (22) unter Verwendung des hydrophoben Harzes der jeweiligen Strömungsfeldschichten (24, 26).

14. Verfahren nach Anspruch 11, 12 oder 13, umfassend:
Kompaktieren des Lamellengraphits und des hydrophoben Harzes zur Herstellung der Strömungsfeldschicht (24, 26);
Kompaktieren von zusätzlichem Lamellengraphit und hydrophobem Herz zur Herstellung der Separatorplattenschicht (22) benachbart dem kompaktierten Material der Strömungsfeldschicht (24, 26); und
Erhitzen der kompaktierten Materialien, um die Separatorplattenschicht (22) an der Strömungsfeldschicht (24, 26) zu befestigen.

15. Verfahren nach Anspruch 14, umfassend:
Kompaktieren von zusätzlichem Lamellengraphit und hydrophobem Harz zur Herstellung, vor dem Erhitzen, einer zweiten nicht-porösen hydrophoben Strömungsfeldschicht (24, 26) an einer entgegengesetzen Seite der kompaktierten Separatorplattenschicht (22); und
Befestigen der zwei Strömungsfeldschichten (24, 26) an der Separatorplattenschicht (22) unter Verwendung der hydrophoben Harze der Separatorplattenschicht bzw. der Strömungsfeldschichten (24, 26).

## Revendications

1. Ensemble plaque séparateur (20) destiné à une utilisation dans une pile à combustible, comprenant :
une couche de plaque séparatrice (22) ;
une première couche de champ de flux non poreuse, hydrophobe (24) adjacente à un premier côté de la couche de plaque séparatrice (22) ; et
une deuxième couche de champ de flux non poreuse, hydrophobe (26) adjacente à un deuxième côté de la couche de plaque séparatrice (22) ; **caractérisé en ce que** :
la première couche de champ de flux et la deuxième couche de champ de flux (24, 26) et/ou la couche de plaque séparatrice comprennent du graphite et une résine hydrophobe ; et
la résine hydrophobe contenue dans la couche ou les couches respectives fixe les couches de champ de flux (24, 26) à la couche de plaque séparatrice (22).

2. Ensemble selon la revendication 1, dans lequel ledit graphite est un graphite lamellaire.

3. Ensemble selon la revendication 2, dans lequel le graphite comprend des lamelles de graphite naturel.

4. Ensemble selon la revendication 3, dans lequel le graphite comprend des lamelles de graphite naturel ayant subi une purification thermique.

5. Ensemble selon la revendication 4, dans lequel la couche de plaque séparatrice (22) comprend une plaque séparatrice en carbone.

6. Ensemble selon l'une quelconque des revendications précédentes, dans lequel la résine hydrophobe a une énergie superficielle inférieure à 25 DYNE/cm (0,025 N/m).

7. Ensemble selon l'une quelconque des revendications précédentes, dans lequel la première couche de champ de flux et la deuxième couche de champ de flux (24, 26) comprennent un premier rapport de mélange du graphite lamellaire contre la résine hydrophobe et la couche de plaque séparatrice (22) comprend un deuxième rapport de mélange, différent, du graphite lamellaire contre la résine hydrophobe.

8. Ensemble selon la revendication 7, dans lequel la couche de plaque séparatrice (22) comprend approximativement 70 % à approximativement 80 % de graphite lamellaire et un pourcentage restant correspondant de résine hydrophobe.

9. Ensemble selon l'une quelconque des revendications 1 à 6, l'ensemble ayant une composition en matériau constante comprenant le graphite lamellaire et la résine hydrophobe dans tout l'ensemble.

10. Ensemble selon la revendication 9, dans lequel chacune des couches comprend approximativement 80 % de graphite lamellaire et approximativement 20 % de résine hydrophobe.

11. Procédé de fabrication d'un ensemble plaque séparateur (20) destiné à une utilisation dans une pile à combustible, comprenant :
la formation d'une couche de plaque séparatrice (22) ;
la formation d'au moins une couche de champ de flux (24, 26) ;
l'utilisation de graphite lamellaire et d'une résine hydrophobe pour former au moins l'une de la couche de plaque séparatrice (22) ou de la couche de champ de flux (24, 26) de telle sorte que ladite au moins une couche soit non poreuse et hydrophobe ; et
la fixation de la couche de champ de flux (24, 26) à la couche de plaque séparatrice (22) en utilisant la résine hydrophobe contenue dans la couche ou les couches respectives.

12. Procédé selon la revendication 11, comprenant l'utilisation de graphite lamellaire et de résine hydrophobe pour former la couche de champ de flux (24, 26) et la couche de plaque séparatrice (22) et la fixation de la couche de champ de flux (24, 26) à la couche de plaque séparatrice (22) en utilisant les résines hydrophobes de la couche de plaque séparatrice et de la couche de champ de flux (24, 26).

13. Procédé selon la revendication 11, comprenant la formation de deux couches de champ de flux non poreuses, hydrophobes (24, 26) en utilisant du graphite lamellaire et de la résine hydrophobe et la fixation des couches de champ de flux (24, 26) à des côtés opposés de la couche de plaque séparatrice (22), respectivement, en utilisant la résine hydrophobe des couches de champ de flux respectives (24, 26).

14. Procédé selon la revendication 11, 12 ou 13, comprenant
le compactage du graphite lamellaire et de la résine hydrophobe pour former la couche de champ de flux (24, 26) ;
le compactage de graphite lamellaire et de résine hydrophobe additionnels pour former la couche de plaque séparatrice (22) adjacente au matériau compacté de la couche de champ de flux (24, 26) ; et
le chauffage des matériaux compactés pour fixer la couche de plaque séparatrice (22) à la couche de champ de flux (24, 26).

15. Procédé selon la revendication 14, comprenant le compactage de graphite lamellaire et de résine hydrophobe additionnels pour former une deuxième couche de champ de flux non poreuse, hydrophobe (24, 26) sur un côté opposé de la couche de plaque séparatrice compactée (22) avant le chauffage ; et la fixation des deux couches de champ de flux (24, 26) à la couche de plaque séparatrice (22) en utilisant les résines hydrophobes de la couche de plaque séparatrice et des couches de champ de flux (24, 26), respectivement.
